(19) Europäisches Patentamt
European Patent Office
Office européen des brevets

(11) Publication number: **0 001 004**
**B1**

(12) # EUROPEAN PATENT SPECIFICATION

(45) Date of publication of patent specification: **24.02.82**

(51) Int. Cl.³: **C 08 G 2/14, C 11 D 3/37**

(21) Application number: **78300298.3**

(22) Date of filing: **18.08.78**

(54) **Polymeric acetal carboxylates, a method for their preparation and their use in a detergent composition.**

(30) Priority: **22.08.77 US 826425**
**22.08.77 US 826426**
**08.05.78 US 904067**
**22.08.77 US 826424**

(43) Date of publication of application:
**07.03.79 Bulletin 79/5**

(45) Publication of the grant of the patent:
**24.02.82 Bulletin 82/8**

(84) Designated Contracting States:
**BE CH DE FR GB LU NL SE**

(56) References cited:
**FR - A - 2 233 338**
**GB - A - 876 956**

(73) Proprietor: **MONSANTO COMPANY**
**Patent Department 800 North Lindbergh Boulevard**
**St. Louis, Missouri 63166 (US)**

(72) Inventor: **Crutchfield, Marvin Mack**
**1529 Cerulean Drive**
**St. Louis Missouri (US)**
Inventor: **Papanu, Victor Dennis**
**2477 Westmeade Drive**
**Maryland Heights Missouri 63043 (US)**
Inventor: **Warren, Craig Bishop**
**3 Dogwood Lane**
**Rumson New Jersey (US)**

(74) Representative: **Lunt, John Cooper et al,**
**Monsanto House 10-18 Victoria Street**
**London, SW1H ONQ (GB)**

EP 0 001 004 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Polymeric acetal carboxylates, a method for their preparation and their use in a detergent composition.

## Background of the Invention

This invention relates to novel polymeric acetal carboxylates useful as complexing agents and detergency builders.

The property possessed by some materials of improving detergency levels of soaps and synthetic detergents and the use of such materials in detergent compositions is known. Such cleaning boosters are called "builders" and such builders permit the attainment of better cleaning performance than is possible when so-called unbuilt compositions are used. The behavior and mechanisms by which builders perform their function are only partially understood. It is known that good builders must be able to sequester most of the calcium and/or magnesium ions in the wash water since these ions are detrimental to the detergency process. However, it is difficult to predict which class of compounds possess useful combinations of builder properties and which compounds to not because of the complex nature of detergency and the countless factors which contribute both to overall performance results and the requirements of environmental acceptability.

Sodium tripolyphosphate (STP) has been found to be a highly efficient cleaning and detergent builder and this compound has been widely used for decades in cleaning and detergent formulations. Indeed, millions of pounds of STP are used each year in cleansing formulations because of its superior builder qualities. However, because of the recent emphasis on removing phosphates from detergent and cleaning compositions for environmental reasons, the detergent and cleaning industry is now looking for materials suitable for use as builders which do not contain phosphorus, and which are environmentally acceptable.

A large number of materials which do not contain phosphorus have been evaluated for use in detergent and cleaning formulations as a builder, but all of these materials suffer one or more disadvantages, usually either poor builder properties or poor biodegradability. As an example, U.S. Patent 3,692,685 discloses salts of oxydisuccinic acid and carboxymethyl oxysuccinic acid as detergent builders and U.S. Patent 3,708,436 discloses a mixture of polymeric maleic anhydride with sodium nitrilotriacetate or STP. Numerous U.S. Patents, such as U.S. 3,704,320, disclose ether carboxylates as detergency builders and several references, such as U.S. 3,764,586 and U.S. 3,308,067, disclose polymeric, aliphatic polycarboxylic acids having certain specific structural relationships useful as builders. French Specification FR - A - 2 233 338 relates to a process for the preparation of polycarboxylates and polyaldehydopolycarboxylates which are said to be useful as builders in detergent formulations.

Despite the advances taught in these and other references in the prior art to find a cleaning and detergency builder which does not contain phosphorus, all of these materials suffer from one or more disadvantages. Of the above-mentioned materials, those that are biodegradable are not equivalent to STP in builder performance, and of those that are equivalent to STP in builder performance, they are usually biodegradable only with great difficulty. Inorganic builders other than STP are generally not satisfactory for use as a builder in detergent formulations because of their poor builder properties. Sodium aluminum silicates, commonly known as zeolites, have been proposed for use in detergent formulations since they are able to soften water by removing calcium ions; however, they are not very effective in removing magnesium ions from water. Moreover, it is clear that such water-insoluble, clay-like materials have the potential problem of producing a sediment in the cleaning solution and the resulting waste waters.

Thus, it can be seen that there is a need for a new class of materials with builder properties equivalent to STP, which does not contain phosphorus, which is water-soluble, and which achieves environmental acceptability by being readily biodegradable. Now, according to the present invention, there is provided a new class of polymeric acetal carboxylates which are equal to, if not superior to, STP and which will depolymerize rapidly in a non-alkaline medium to form low molecular weight components which are readily biodegradable.

## Summary of the Invention

These and other advantages are achieved by a polymer having the following empirical formula:

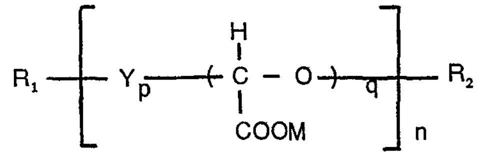

wherein Y is one or more comonomers randomly distributed in the polymer; n averages at least 4; p is 0 to about 2; q is at least 1; $R_1$ and $R_2$ are individually any chemically stable group which stabilizes the polymer, such that in an aqueous solution of 0.5 molar sodium hydroxide containing 10 grams per liter of the polymer, the average chain length of the polymer is not reduced by more than 50 percent, as

determined by Proton Magnetic Resonance, after 1 hour at 20°C; and M is selected from alkali metal, ammonium, alkyl groups having 1 to 4 carbon atoms, and alkanol amine groups having from 1 to 4 carbon atoms in the alkyl chain.

Broadly described, the polymers of the present invention can be prepared by: (A) bringing together under polymerization conditions an ester of glyoxylic acid, optionally one or more materials capable of polymerizing with the ester of glyoxylic acid, and a polymerization initiator; and (B) stabilizing the resulting copolymer against rapid depolymerization in alkaline solution. To form a salt of the copolymer, the stabilized copolymer can be saponified.

Any number of esters of glyoxylic acid can be used as one starting material to prepare the polymers of the present invention. Such esters can be made by the reaction of an alcohol containing from 1 to 4 carbon atoms with glyoxylic acid hydrate under conditions known to those skilled in the art. Suitable esters include those having from 1 to 4 carbon atoms in the ester radical, such as methyl, ethyl, propyl, isopropyl, butyl and isobutyl esters. Other esters of glyoxylic acid can also be used, provided that the particular ester does not interfere with the polymerization or interfere with the conversion of the hemiacetal ester of glyoxylic acid to the corresponding aldehyde ester or interfere with the saponification of the stabilized ester to the alkali metal salt, and such esters of glyoxylate are equivalent for purposes of this invention. Methyl and ethyl esters are preferred.

Thereafter, the resulting hemiacetal ester of glyoxylic acid can be converted to the corresponding aldehyde ester by any number of techniques known to those skilled in the art, such as the reaction of the ester with phosphorus pentoxide according to the following general equation:

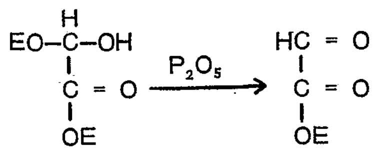


where E is an alkyl group having 1 to 4 carbon atoms. The resulting aldehyde ester is then polymerized using a suitable initiator.

Any number of comonomers known to those skilled in the art optionally can be polymerized with the aldehyde ester to form a polymer of the present invention. It is only necessary that the comonomer has at least two reactive sites and does not inhibit polymerization or cause the polymer of the present invention to depolymerize in alkaline solution. Suitable comonomers include: epoxy compounds, such as ethylene oxide, (giving $Y = —CH_2CH_2O—$), propylene oxide, (giving $Y = —CH_2CH(CH_3)O—$), epihalohydrin epoxysuccinate and the like; aldehydes, $R_3CHO$ wherein $R_3$ is hydrogen or an alkyl radical containing 1 to 20 carbon atoms, such as formaldehyde, acetaldehyde, and the like. It is particularly beneficial when the comonomer contains substituent carboxy groups. Comonomers having from 1 to 4 carbon atoms, such as ethylene oxide, formaldehyde or acetaldehyde are preferred.

Mixtures of comonomers can be polymerized with the aldehyde ester to form a terpolymer, or even a more complex polymeric structure. For example, mixtures of the same class of comonomers, such as a mixture of epoxy compounds like ethylene oxide and propylene oxide, can be copolymerized with the aldehyde ester to form a terpolymer. Even comonomers that might inhibit polymerization when used alone can be mixed with a lower molecular weight aldehyde like formaldehyde or acetaldehyde and polymerized with the aldehyde ester to form a terpolymer wherein the comonomers are randomly dispersed along the polymeric chain. Numerous other examples will occur to those skilled in the art in view of the present disclosure, such as a mixture of ethylene oxide and formaldehyde.

Any number of initiators can be used for the polymerization. Nonionic or ionic initiators provide satisfactory results. Suitable initiators include: amines, such as triethyl amine, 2-hydroxy pyridine-$H_2O$ complex, and the like; strong Lewis acids, such as boron trifluoride or boron trifluoride diethyl etherate, phosphorus pentafluoride, stannic chloride and the like. Even traces of hydroxy ion or cyanide ion will trigger the polymerization. Sodio derivatives such as diethylsodiomalonate or sodiomethylmalonate esters and the like have been used with good results.

As will occur to those skilled in the art in view of the present disclosure, the number of carboxylate groups in the polymer of the present invention is important since the number of carboxylate groups affect the usefulness of the corresponding polymer salt as a chelant, sequestrant and detergent builder. Hence, the nature of the comonomer or comonomers (i.e., the nature of Y), the mole ratio of comonomer to aldehyde ester, (i.e., the value of p and q) and the number of repeating units in the polymer of the present invention (i.e., the average value of n) are each interrelated and important since they affect the number of carboxylate groups in the polymer.

As noted above, the aldehyde ester can be polymerized with any number of comonomers, or even a mixture of comonomers, but as will occur to those skilled in the art, large comonomers (or mixtures) that disperse the carboxylate groups along the polymer chain too widely or inhibit chelation by steric hindrance of the carboxylate groups decrease the effectiveness of the corresponding polymer salt as a sequestrant, chelant and builder. This decrease in effectiveness may be partially offset if the

comonomer, or one of the comonomers, contains a carboxylate group. It is preferred to use a relatively small comonomer that does not disperse the carboxylate groups too widely or inhibit chelation by steric hindrance, such as ethylene oxide or formaldehyde.

The mole ratio of aldehyde ester to comonomer or comonomers (i.e., the value of q to p) is important. Although there is theoretically no upper limit to the moles of comonomer or comonomers to the moles of acetal carboxylate segments in the polymer, when the mole ratio of comonomer to acetal carboxylate segments exceeds about 2:1 (i.e., p is up to about 2 and and q is 1) the polymer salt loses much of its effectiveness as a chelant, sequestrant and detergent builder. It is preferred that the mole ratio of acetal carboxylate to comonomer is about 1:1 (i.e., p and q are each about 1) or higher, say 5:1 or even 99:1 (i.e., p is 1 and q is at least about 5, e.g., 99). Of course, the polymer of the present invention is most effective as a chelant, sequestrant and detergent builder when a comonomer is not present, i.e., when p equals 0.

The number of repeating units, i.e., the average value of n, in the polymer of the present invention is also important, since the effectiveness of the polymer salt as a chelant, sequestrant and cleaning and detergency builder is affected by the average chain length. Even when the polymer averages only four repeating units (i.e, n averages 4), the polymer shows some effectiveness as a sequestrant, chelating agent and builder. Although there is no upper limit to the desired number of repeating units, which may average as high as 400, or even higher, there does not seem to be an advantage to having a polymer with an average of more than about 200 repeating units. When the average number of repeating units exceeds about 100, significant improvement in sequestration, chelation and builder properties is not observed. Thus, it is preferred that the polymer of the present invention contain an average between about 10 and about 200 units, and even more preferred that the polymer contains an average between about 50 and about 100 repeating units in the chain.

Other important factors believed to control the chain length of the polymer include: (1) the initiator type and concentration, (2) the temperature of the polymerization, (3) the purity of the starting materials, and (4) the presence of solvents and their levels. As will occur to those skilled in the art, these factors are all interrelated and the desired chain length can easily be controlled by simple experimentation by controlling these variables. For example, when the polymerization is initiated using 2-hydroxy pyridine-$H_2O$ complex at a temperature of about $-70°C$., the resulting polymer has a greater chain length, as determined by Proton Magnetic Resonance (PMR), than when the polymerization is initiated at about 20°C., using the same initiator, solvent and starting materials.

After the aldehyde ester has been polymerized with or without a comonomer as discussed above, any number of chemically reactive groups can be added to the polymer termini, preferably using an ionic catalyst such as boron trifluoride etherate, trifluoroacetic acid, sulfuric acid, potassium carbonate and the like. It is only necessary that the chemically reactive group stabilizes the polymer against rapid depolymerization in an alkaline solution, and the specific nature of the chemically reactive group is not important in the proper function of the polymer in its intended use. As an example, suitable chemically stable end groups include stable substituent moieties derived from otherwise stable compounds such as: alkanes, such as methane, ethane, propane, butane and higher alkanes such as decane, dodecane, octadecane and the like; alkenes such as ethylene, propylene, butylene, decene, dodecene and the like; branched chain hydrocarbons, both saturated and unsaturated such as 2-methyl butane, 2-methyl butene, 4-butyl-2,3-dimethyl octane and the like; aromatic hydrocarbons such as benzene, toluene, xylene and the like; cycloalkanes such as cyclohexane and cyclohexene and the like; haloalkanes such as chloromethane, chlorobutane, dichloropentane and the like; alcohols such as methanol, ethanol, 2-propanol, cyclohexanol, sodium phenate and the like; polyhydric alcohols such as 1,2-ethane diol, 1,4-benzene diol and the like; mercaptans such as methane thiol, 1,2-ethanedithiol and the like; ethers such as methoxyethane methyl ether, ethyl ether, ethoxy propane and cyclic ethers such as ethylene oxide, epichlorohydrin, tetramethylene oxide and the like; and carboxylate-containing compounds such as the alkali metal salts of carboxylic acids, the esters of carboxylic acids and the anhydrides. The above listing is intended to be instructive and is not intended to be limited since chemically stable end groups that stabilize the polymer against rapid depolymerization in an alkaline solution include nitrilo groups and halides such as chlorides, bromides and the like.

Particularly suitable end groups include alkyl groups, alkyl groups, containing oxygen and cyclic alkyl groups containing oxygen; such as oxyalkyl groups like methoxy, ethoxy and the like; carboxylic acids such as

$—CH_2COOM$, 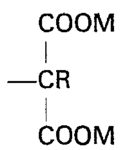 , 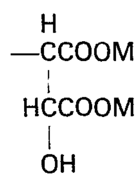 , 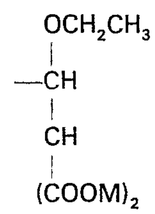

and the like; aldehydes, ethers and other oxygen-containing alkyl groups such as $—OCHCH_3OC_2H_5$,

$-(OCH_2CH_2)_{1-4}OH$, $-(CH_2CH_2O)_{1-4}H$, 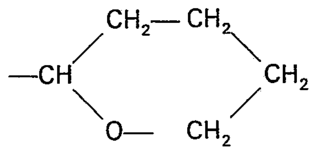 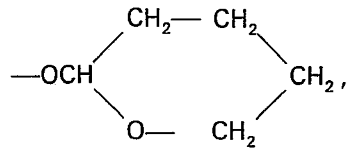

and the like.

In the above examples of suitable end groups, M is alkali metal, ammonium, alkanol amine, alkyl group of 1 to 4 carbon atoms and R is hydrogen or alkyl group of 1 to 8 carbon atoms. As will occur to those skilled in the art in light of the present disclosure, the chemically stable end groups at the polymer termini can be alike or unlike.

In one embodiment of this invention, diethylsodiumalonate or sodiumethylmalonate is used as an initiator to form the polymer. These compounds not only initiate the polymerization, but also the ester adds to the termini as one of the chemically stable end groups to stabilize that end of the polymer against rapid hydrolysis in an alkaline solution. These sodio compounds can be prepared from the corresponding esters using sodium hydride in a solvent, such as tetrahydrofuran, by techniques known to those skilled in the art.

One preferred class of polymer comprises those wherein $R_1$ is $HO(CH_2CH_2O)_{1-3}$, $R_2$ is $-(CH_2CH_2O)_{1-3}$ H and n averages between about 50 and about 200; and another preferred class comprises those wherein M is sodium,

$R_1$ is 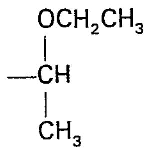 or 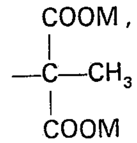

$R_2$ is 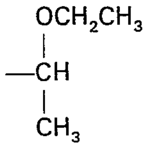

and n averages about 50.

The stabilized polymer ester is useful as an intermediate to prepare the corresponding alkali metal, ammonium, or alkanol amine salts. It is only necessary to saponify the stabilized polymer ester with a base, such as lithium hydroxide, sodium hydroxide, potassium hydroxide, and the like, using conventional saponification techniques to make a salt suitable for use as a builder and as a sequestrant. The ammonium or alkanol amine salts can be prepared from the corresponding alkali metal salts using conventional ion exchange techniques.

The amount of polymer salt required to effectively complex the ions in a given system will depend to some extent on the particular polymer salt being used and the particular metal or alkaline earth metal ion in the aqueous media. Because the polymer of the present invention tends to depolymerize in acid media, effective complexing is limited to neutral or preferably basic solution. Optimum conditions and amounts of the polymer salt to be used can readily be determined by routine experimentation.

The polymer salts of the present invention are also useful as builders in detergent formulations. Since the pH of a detergent solution is usually between pH 9 and pH 10, the polymers of the present invention will not depolymerize rapidly when used as a detergent builder in aqueous solution at normal use concentrations (~250 ml./washer), temperatures (10°—60°C.) and times (i.e., about 15 minutes) typical of United States home laundry practices. Generally, the use of the alkali metal salts, particularly the sodium salt, is preferred. However, in some formulations where greater builder solubility is required, the use of ammonium or alkanol amine salts may be desirable.

The detergent formulations will contain at least 1 percent by weight and preferably at least 5 percent by weight of the polymer salts of this invention. In order to obtain the maximum advantages of the polymers of this invention as builders, the detegent should preferably contain from 5 percent to 75 percent of these salts. The polymer salts of this invention can be the sole detergency builder, or the polymer salts can be utilized in combination with other detergency builders which may constitute from 0 to 95 percent by weight of the total builders in the formulation. By way of example, builders which can be employed in combination with the polymer salts of this invention include either water insoluble materials, such as sodium alumino silicates, commonly known as zeolites, or water soluble inorganic builder salts such as alkali metal polyphosphates, i.e., the tripolyphosphates and pyrophosphates, alkali metal carbonates, borates, bicarbonates and silicates and water soluble organic builders, including amino polycarboxylic acids and salts, such as alkali metal nitrilotriacetates, cycloalkane polycarboxylic acids and salts, ether polycarboxylates, alkyl polycarboxylates, epoxy polycarboxylates, tetrahydrofuran polycarboxylates, such as 1,2,3,4 or 2,2,5,5 tetrahydrofuran tetracarboxylates, benzene polycarboxylates, oxidized starches, amino(trimethylene phosphonic acid) salts, diphosphonic acid salts (e.g., the sodium salts of methylene diphosphonic acid or 1-hydroxy ethylidene 1,1-dimethylene-phosphonic acid), and the like.

The detergent formulations will generally contain from 5 percent to 95 percent by weight total builder (although greater or lesser quantities may be employed if desired). The total amount of builder employed will be dependent on the intended use of the detergent formulation, other ingredients of the formulation, pH conditions and the like. For example, general laundry powder formulations will usually contain from about 20 percent to about 60 percent builder; and machine dishwashing formulations will usually contain from about 60 percent to about 90 percent builder. Optimum levels of builder content as well as optimum mixtures of polymer salts of this invention with other builders for various uses can be determined by routine tests in accordance with conventional detergent formulation practice.

The detergent formulations will generally contain a water soluble detergent surfactant, although the surfactant ingredient may be omitted from machine dishwashing formulations. Any water soluble anionic, nonionic, zwitterionic or amphoteric surfactant can be employed.

Examples of suitable anionic surfactants include soaps such as the salts of fatty acids containing about 9 to 20 carbon atoms, e.g., salts of fatty acids derived from coconut oil and tallow; alkyl benzene sulfonates — particularly linear alkyl benzene sulfonates in which the alkyl group contains from 10 to 16 carbon atoms; alcohol sulfates; ethoxylated alcohol sulfates, hydroxy alkyl sulfonates; alkyl sulfates and sulfonates; monoglyceride sulfates, acid condensates of fatty acid chlorides with hydroxy alkyl sulfonates; and the like.

Examples of suitable nonionic surfactants include alkylene oxide (e.g., ethylene oxide), condensates of mono- and polyhydroxy alcohols, alkyl phenols, fatty acid amides and fatty amines; amine oxides, sugar derivatives such as sucrose monopalmitate; long chain tertiary phosphine oxides; dialkyl sulfoxides; fatty acid amides (e.g., mono- or diethanol amides of fatty acids containing 10 to 18 carbon atoms); and the like.

Examples of suitable zwitterionic surfactants include derivatives of aliphatic quaternary ammonium compounds such as 3-(N,N-dimethyl-N-hexadecylammonio) propane-1-sulfonate and 3-(N,N-dimethyl-N-hexadecyl-ammonio)-2-hydroxy propane-1-sulfonate.

Examples of suitable amphoteric surfactants include betains, sulfobetains and fatty acid imidazole carboxylates and sulfonates.

It will be understood that the above examples of surfactants are by no means comprehensive and that numerous other surfactants are known to those skilled in the art. It will be further understood that the choice and use of surfactants will be in accordance with well understood practices of detergent formulation. For example, anionic surfactants, particularly linear alkyl benzene sulfonates, are preferred for use in general laundry formulations, whereas low foaming nonionic surfactants are preferred for use in machine dishwashing formulations.

The quantity of surfactant employed in the detergent formulations will depend on the surfactant chosen and the end use of the formulation. In general, the formulations will contain at least 5 percent, for example from 5 percent to 50 percent surfactant by weight, although as much as 95 percent or more surfactant may be employed if desired. For example, general laundry powder formulations normally contain 5 percent to 50 percent, preferably 15 percent to 25 percent surfactant. Machine dishwashing formulations normally contain about 0.5 percent to about 5 percent surfactant. Liquid dishwashing formulations normally contain about 20 percent to about 45 percent surfactant. The weight ratio of surfactant to builder will generally be in the range of from 1:12 to 2:1.

In addition to builder and surfactant components, detergent formulations may contain fillers such as sodium sulfate and minor amounts of bleaches, dyes, optical brighteners, soil anti-redeposition agents, perfumes and the like.

In machine dishwashing compositions, the surfactant will be a low-foaming anionic surfactant which will constitute 0 to 5 percent of the formulation.

It is to be noted that when the alkali metal, ammonium or alkanol ammonium salts of the present invention are used as builders, they will be used generally in an alkaline medium. When the polymers of the present invention are used at a pH of 7 or below, the polymer depolymerizes. Thus, the polymers of the present invention when used as builders will be effective for chelating, sequestering and as detergency and cleaning builders, but when an aqueous solution containing the polymer is discharged into a sewer or other waste water system, the polymer will ultimately depolymerize into small fragments which are readily biodegradable.

## Description of the preferred embodiments

This invention is illustrated by, but not limited to, the following Examples wherein all percentages are by weight unless otherwise noted.

### Example I

This Example illustrates the preparation of the anhydrous aldehyde ester useful to prepare the polymers of the present invention.

To a 500 milliliter round-bottom flask equipped with an efficient stirrer and a heater is added 100 grams of methyl glyoxylate methyl hemiacetal and 160 grams of phosphorus pentoxide. The contents of the flask are heated to 100°C. with stirring for one hour and then allowed to cool to room temperature. The resulting aldehyde ester is recovered from the residual phosphorus pentoxide by distillation and stored in a glass stoppered bottle.

Example II

To a 50 milliliter single-necked, round-bottomed reaction flask equipped with a magnetic stirrer was added 10 grams (0.114 mole) of freshly distilled aldehyde ester from Example I and 4 milliliters of methylene chloride. The temperature of the flask and the contents was lowered to about 0°C., and 0.5 milliliters of 0.05 molar sodium diethyl methylmalonate was added to initiate polymerization. The flask was kept in an ice bath, and when the temperature returned to 0—2°C., (about 45 minutes) 0.18 milliliter trifluoroacetic acid (1.5 mole percent) and 3.5 milliliters of ethyl vinyl ether was added to the mixture. The mixture was stirred at room temperature overnight. About 2 milliliters of 1 molar NaOH solution was added to the mixture and the volatiles were removed under vacuum. Then 12 milliliters of 2.5 molar NaOH was added. The mixture was stirred at about 0°C. for about 5 hours and then heated to about 40°C. for about 24 hours. The methanol and residual solvents were removed by rotary evaporation. The solution was concentrated to about 15 percent, precipitated in about 100 milliliters of methanol and stirred for 30 minutes. The precipitate was recovered by filtration and dried. The precipitate was then redissolved in distilled water, precipitated into methanol, stirred and recovered by filtration. The yield was about 74.8 percent. Analysis of the product, including the chain length, by Proton Magnetic Resonance (PMR) Spectra Analysis, showed that the product was a mixture, mostly a polymer, having the following formula:

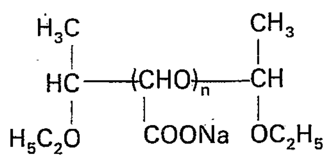

where n averages 40, and a minor amount of a polymer having the formula:

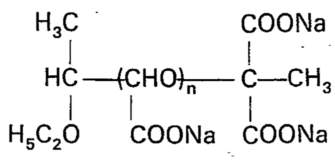

Examples III through V

The procedure of Example II was repeated except that the temperature of initiation was varied. The result of this variation of the temperature of initiation on the chain length as determined by the average value of n is shown in the following tabulation:

| Example | Temperature of Initiation (°C) | n |
|---|---|---|
| III | −70 | 60 |
| IV | −20 | 55 |
| V | 20 | 20 |

Example VI

The procedure of Example II was repeated except different initiation temperatures were used to provide a series of samples having different chain lengths, as measured by PMR. These samples were tested for sequestration function using the procedures described by Matzner et al ("Organic Builder Salts as Replacements for Sodium Tripolyphosphate", TENSIDE DETERGENTS, 10 No. 3, pages 119—125) 1973. The sequestration of calcium ions and magnesium ions (as a percent of STP performance) as a function of chain length is shown below:

| Chain Length (n) | % STP |
|---|---|
| 2 | 50 |
| 20 | 114 |
| 45 | 157 |
| 70 | 169 |
| 130 | 172 |

### Example VII

The biodegradation of three of the samples from Example VI was measured by diluting one part by volume of an activated sewerage sludge with about 10 parts by volume of river water, and adding a known amount of the polymer to the diluted sludge. The biodegradation is determined by measuring the $CO_2$ evolution from the diluted sludge. The results are presented in the following tabulation:

| Chain Length | $CO_2$ Evolved (% Theory) 1 Week | 3 Weeks | 4 Weeks |
|---|---|---|---|
| 20 | 9.8 | 59 | 73 |
| 45 | 11.7 | 56 | 67 |
| 120 | 18.5 | 58 | 66 |

### Example VIII

To a 100 milliliter single-necked, round-bottomed reaction flask equipped with a magnetic stirrer was added 10 grams of freshly distilled aldehyde ester from Example I and 4 milliliters of methylene chloride. The temperature of the flask and the contents were lowered to about 0°C., 5.3 grams of ethylene oxide and 0.5 milliliters boron trifluoride diethyl etherate were added to initiate polymerization. The flask was kept in an ice bath until the temperature returned to 0—2°C., (about 45 minutes). The mixture was stirred at room temperature overnight. About 2 milliliters of 1 molar NaOH solution was added to the mixture and the volatiles were removed under vacuum. Then 12 milliliters of 2.5 molar NaOH were added. The mixture was stirred at about 0°C. for about 5 hours and then heated to about 40°C. for about 24 hours. The methanol and residual solvents were removed by rotary evaporation. The solution was concentrated to about 15 percent, precipitated in about 100 milliliters of methanol and stirred for 30 minutes. The precipitate was recovered by filtration and dried. The precipitate was then redissolved in distilled water, precipitated into methanol, stirred and recovered by filtration. The yield was about 74.8 percent. Analysis of the product, including the chain length, by Proton Magnetic Resonance (PMR) Spectra Analysis, showed that the product was a copolymer having the following empirical formula:

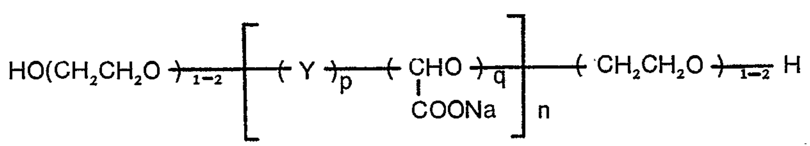

where n averaged about 20, Y is $—CH_2CH_2O—$ randomly distributed in the copolymer, and the ratio of p to q was about 1:3.

### Example IX

The procedure of Example VIII was repeated except that about 5 mole percent ethylene oxide was mixed with about 95 mole percent aldehyde ester from Example I. The copolymer was analyzed by PMR, and the composition is the same as in Example VIII except that the ratio of p to q was about 1:25.

### Example X

The general procedure of Example VIII was repeated except that about 4.4 grams of aldehyde ester from Example I was diluted with about 1.5 milliliters of methylene chloride, the temperature was reduced to about −10°C., and then about 1.2 mole percent boron trifluoride diethyl etherate was added to the methyl glyoxylate solution. After about 30 minutes, 0.01 mole ethylene oxide was added and allowed to react at about 22°C. for about 34 hours. The resulting stabilized copolymer was hydrolyzed using 2.5 molar NaOH as in Example II. Analysis by PMR showed that the yield was about

73 percent. The average mole ratio of acetal carboxylate segments to oxyethylene groups (i.e., the mole ratio of q to p) was about 8.4:1.

Example XI

A portion of the copolymer from Example X was tested for sequestration function using the procedures described by Matzner et al ("Organic Builder Salts as Replacements for Sodium Tripolyphosphate", TENSIDE DETERGENTS, 10 No. 3, pages 119—125) 1973. The sequestration of calcium ions and magnesium ions (as a percent of STP performance) shows that the copolymer salt was about 104 percent of STP performance.

Example XII

The general procedure of Example VIII is repeated except that about 5 grams of aldehyde ester from Example I was diluted with about 1.5 milliliters of methylene chloride, the temperature is reduced to 0°C., and about 1 gram of a saturated aliphatic aldehyde having the empirical formula $C_{12}H_{25}CHO$ in 4 milliliters of methylene chloride is added to the aldehyde ester. Then, about 1.2 mole percent boron trifluoride-diethyl etherate is added. After the polymerization is completed, about 0.2 milliliters trifluoroacetic acid is added and 0.2 gram ethylene oxide is added and allowed to react at 20°C. for 24 hours. The resulting stabilized copolymer is hydrolyzed using 10 molar NaOH. The copolymer precipitates and is recovered by filtration. Analysis of the product by PMR showed that the average ratio of acetal carboxylate segments to $—C_{12}H_{25}CHO—$ groups is about 6:1.

Example XIII

Using the general procedure of Example II, about 50 grams of unstabilized polymer is prepared by polymerizing methyl glyoxylate using a trace of 10 normal sodium hydroxide as initiator. The resulting polymer is diluted with sufficient methylene chloride to permit stirring at 0°C. Then, 5 gram portions were taken and separately stabilized using a variety of chemically stable end groups. The reagent and the catalyst employed to provide chemically stable end groups, the time and temperature of adding the end groups, and the identification of the end groups are shown in the Table.

TABLE

POLYMER STABILIZATION

| Catalyst | Reagent | Time (hrs.) | Temp. (°C.) | $R_1$ | $R_2$ |
|---|---|---|---|---|---|
| $BF_3$ Etherate | Ethylene Oxide | 48 | 25 | $HO(CH_2CH_2O)_{13}$ | $-(CH_2CH_2O)_{13}-H$ |
| $CF_3COOH$ | Ethyl Vinyl Ether | 16 | 25 | 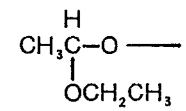 | 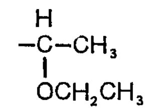 |
| $CF_3COOH$ | Dihydropyran | 16 | 25 | 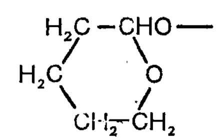 | 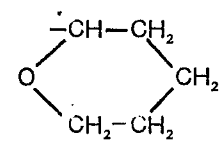 |
| Conc. $H_2SO_4$ | Diethyl Ethoxymethylene Malonate | 16 | 25 | 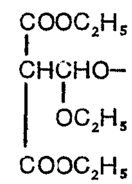 | 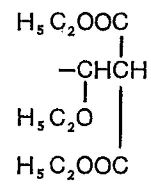 |
| $K_2CO_3$ | Dimethylsulfate | 24 | 40 | $H_3CO-$ | $-CH_3$ |
| $CF_3COOH$ | Dodecyl Vinyl Ether | 16 | 25 | 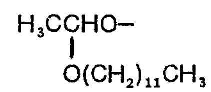 | 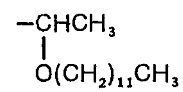 |
| Conc. $H_2SO_4$ | Isobutylene | 24 | 25 | 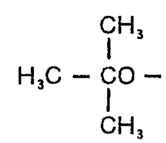 | 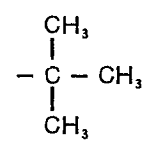 |

TABLE Cont.

POLYMER STABILIZATION

| Catalyst | Reagent | Time (hrs.) | Temp. (°C.) | $R_1$ | $R_2$ |
|---|---|---|---|---|---|
| $BF_3$ Etherate | Trimethylorthoformate | 24 | 25 | Mixture of $H_3CO-$ and 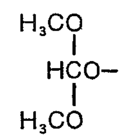 | Mixture of $CH_3$ and 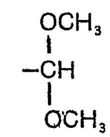 |
| $BF_3$ Etherate | Epichlorohydrin | 24 | 25 | 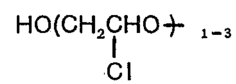 | 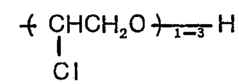 |
| $BF_3$ Etherate | Ethyl-2,3-Epoxy Butyrate | 24 | 25 | 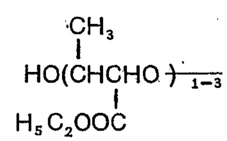 | 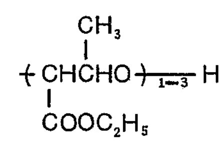 |
| $BF_3$ Etherate | Diethyl *cis* epoxysuccinate | 48 | 25 | 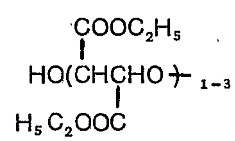 | 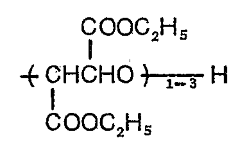 |

Although the invention has been described in terms of specified embodiments which are set forth in considerable detail, it should be understood that this is by way of illustration only and that the invention is not necessarily limited thereto since alternative embodiments and operating techniques will become apparent to those skilled in the art in view of the disclosure.

## Claims

1. A polymer characterized by the empirical formula:

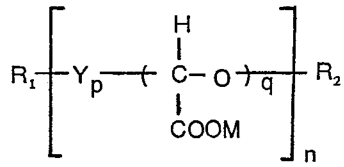

wherein Y is one or more comonomers randomly distributed in the polymer; n averages at least 4; p is 0 to about 2; q is at least 1; $R_1$ and $R_2$ are individually any chemically stable group which stabilizes the polymer such that an aqueous solution of 0.5 molar sodium hydroxide containing 10 grams per liter of polymer, the average chain length of the polymer is not reduced by more than 50 percent, as determined by Proton Magnetic Resonance, after 1 hour at 20°C.; and M is selected from alkali metal, ammonium, alkyl groups having 1 to 4 carbon atoms, and alkanol amine groups having from 1 to 4 carbon atoms in the alkyl chain.

2. A polymer of Claim 1 characterized in that n averages between about 10 and about 200.

3. A polymer of Claim 1 characterized in that n averages between about 50 and about 100.

4. A polymer of Claim 1 characterized in that p is 0 and q is 1.

5. A polymer of Claim 1 characterized in that p and q are each about 1.

6. A polymer of Claim 1 characterized in that p is 1 and q is at least about 5.

7. A polymer of Claim 1 characterized in that $R_1$ and $R_2$ are individually selected from alkyl, alkyl groups containing oxygen and cyclic alkyl groups containing oxygen.

8. A polymer of Claim 5 characterized in that Y is selected from

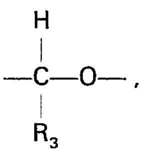 , —$CH_2CH_2O$—, —$CH_2CH(CH_3)O$—,

and mixtures thereof, wherein $R_3$ is hydrogen or an alkyl containing 1 to 20 carbon atoms, and M is sodium or potassium.

9. A polymer of Claim 4 characterized in that $R_1$ is $HO(CH_2CH_2O)_{1-3}$ and $R_2$ is $-(CH_2CH_2O)_{1-3}H$ and n averages between about 50 and about 200.

10. A polymer of Claim 4 characterized in that M is an alkali metal.

11. A polymer of Claim 4 wherein M is sodium,

$R_1$ is 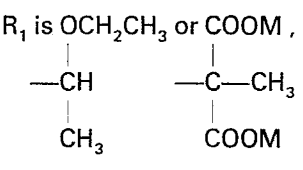 or ,

$R_2$ is 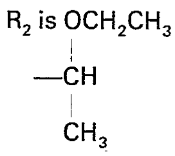

and n averages about 50.

12. A method of preparing the polymer of Claim 1 characterized by:

(A) bringing together, under polymerization conditions, an ester of glyoxylic acid and a polymerization initiator; and

(B) adding to the termini of the resulting polymer a chemically stable end group to confer on the polymer the required stability in aqueous sodium hydroxide solution.

13. A method of Claim 12 in which step (A) comprises bringing together under polymerization conditions an ester of glyoxylic acid, at least one comonomer and a polymerization initiator.

14. A method of Claim 13 characterized in that the comonomer is selected from epoxy

compounds, aldehydes, compounds containing substituent carboxylate groups, and mixtures thereof.

15. A method of Claim 14 characterized in that the comonomer is an aldehyde.

16. A method of Claim 14 characterized in that the comonomer is an epoxy compound.

17. A method of Claim 12 characterized in that the polymerization initiator is selected from amines, strong Lewis acids, hydroxy ion and cyanide ion.

18. A method of Claim 12 characterized in that the chemically stable end group is selected from alkyl groups, alkyl groups containing oxygen and cyclic alkyl groups containing oxygen.

19. A method of Claim 18 characterized in that the stabilized polymer ester is saponified to the corresponding alkali metal salt.

20. A detergent composition characterized in that it contains at least 5 percent by weight of a surfactant selected from anionic, nonionic, zwitterionic, ampholytic and amphoteric surfactants; and at least 1 weight percent of a copolymer having the following empirical formula:

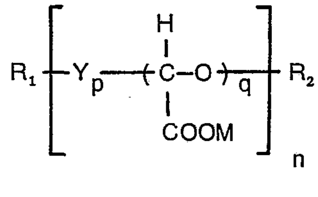

wherein Y is one or more comonomers randomly distributed in the polymer; n averages at least 4; p is 0 to about 2; q is at least 1; $R_1$ and $R_2$ are individually any chemically stable group which stabilizes the polymer such that in an aqueous solution of 0.5 molar sodium hydroxide containing 10 grams per liter of polymer, the average chain length of the polymer is not reduced by more than 50 percent, as determined by Proton Magnetic Resonance, after 1 hour at 20°C.; and M is selected from alkali metal, ammonium and alkanol amine groups having from 1 to 4 carbon atoms in the alkyl chain.

21. A detergent composition of Claim 20 characterized in that the polymer comprises from 5 to 75 weight percent of the detergent composition.

22. A detergent composition of Claim 20 characterized in that p is 0 and q is 1.

23. A detergent composition of Claim 20 characterized in that n averages between about 50 and about 200.

24. A detergent composition of Claim 23 characterized in that p is 1 and q is at least 1.

25. A detergent composition of Claim 23 characterized in that p is 1 and q is at least about 5.

26. A detergent composition of Claim 20 characterized in that Y is selected from

$—CH_2CH(CH_3)O—$, $—CH_2CH_2O—$, 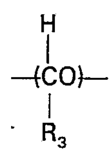

and mixtures thereof, wherein $R_3$ is hydrogen or an alkyl group containing from 1 to 20 carbon atoms.

27. A composition of Claim 20 characterized in that $R_1$ and $R_2$ are individually selected from alkyl and cyclic alkyl groups containing oxygen.

28. A detergent composition of Claim 27 characterized in that M' is an alkali metal.

## Revendications

1. Polymère caractérisé par la formule empirique:

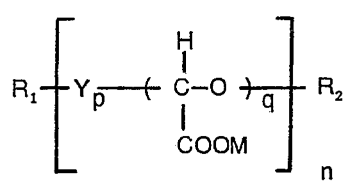

où Y représente un ou plusieurs comonomères distribués au hasard dans le polymère; n est en moyenne au moins 4; p vaut 0 à environ 2; q est au moins 1; $R_1$ et $R_2$ représentent individuellement n'importe quel groupe chimiquement stable qui stabilise le polymère de manière telle que, dans une solution aqueuse de 0,5 molaire contenant 10 grammes par litre de polymère, la longueur de la chaîne moyenne du polymère ne soit pas réduite de plus de 50%, tel que déterminé par résonance magnétique des protons, après 1 heure à 20°C; et M est choisi parmi un métal alcalin, l'ammonium, des groupes alkyles ayant 1 à 4 atomes de carbone et des groupes alcanolamines ayant 1 à 4 atomes de carbone dans la chaîne alkyle.

2. Polymère selon la revendication 1, caractérisé en ce que n est en moyenne compris entre environ 10 et environ 200.

3. Polymère selon la revendication 1, caractérisé en ce que n est en moyenne compris entre environ 50 et environ 100.

4. Polymère selon la revendication 1, caractérisé en ce que p vaut 0 et q vaut 1.

5. Polymère selon la revendication 1, caractérisé en ce que p et q représentent chacun environ 1.

6. Polymère selon la revendication 1, caractérisé en ce que p vaut 1 et q vaut au moins environ 5.

7. Polymère selon la revendication 1, caractérisé en ce que $R_1$ et $R_2$ sont au moins individuellement choisis dans le groupe se composant de groupes alkyles, de groupes alkyles contenant de l'oxygène et des groupes alkyles cycliques contenant de l'oxygène.

8. Polymère selon la revendication 5, caractérisé en ce que Y est choisi dans le groupe se composant de:

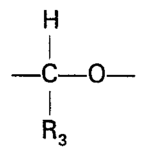 , $-CH_2CH_2O-$, $-CH_2CH(CH_3)O-$,

et de leurs mélanges, où $R_3$ est l'hydrogène ou un groupe alkyle contenant 1 à 20 atomes de carbone et M est le sodium ou le potassium.

9. Polymère selon la revendication 4, caractérisé en ce que $R_1$ est $HO(CH_2CH_2O)_{1-3}$ et $R_2$ est $-(CH_2CH_2O)_{1-3}H$ et n est en moyenne compris entre environ 50 et environ 200.

10. Polymère selon la revendication 4, caractérisé en ce que M est un métal alcalin.

11. Polymère selon la revendication 4, caractérisé en ce que M est le sodium,

$R_1$ est 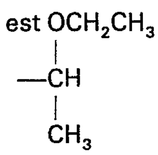 ou 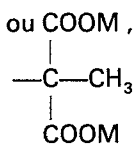 ,

$R_2$ est 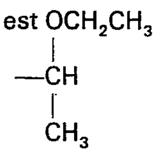

et n est en moyenne 50.

12. Procédé de préparation du polymère de la revendication 1, caractérisé en ce que:

(A) on amène ensemble, dans des conditions de polymérisation, un ester d'acide glyoxylique et un initiateur de polymérisation; et

(B) on ajoute aux extrémités du polymère résultant un groupe d'extrémité chimiquement stable pour conférer au polymère la stabilité exigée dans une solution aqueuse de soude.

13. Procédé selon la revendication 12, dans lequel l'étape (A) consiste à amener ensemble, dans des conditions de polymérisation, un ester d'acide glyoxylique, au moins un comonomère et un initiateur de polymérisation.

14. Procédé selon la revendication 13, caractérisé en ce que le comonomère est choisi dans le groupe se composant de composés époxy, d'aldéhydes, de composés contenant des groupes carboxylates substituants, et de leurs mélanges.

15. Procédé selon la revendication 14, caractérisé en ce que le comonomère est un aldéhyde.

16. Procédé selon la revendication 14, caractérisé en ce que le monomère est un composé époxy.

17. Procédé selon la revendication 12, caractérisé en ce que l'initiateur de polymérisation est choisi dans le groupe se composant d'amines, d'acides de Lewis forts, d'ions hydroxy et d'ions cyanures.

18. Procédé selon la revendication 12, caractérisé en ce que le groupe d'extrémité chimiquement stable est choisi parmi des groupes alkyles, des groupes alkyles contenant de l'oxygène et des groupes alkyles cycliques contenant de l'oxygène.

19. Procédé selon la revendication 18, caractérisé en ce que l'ester de polymère stabilisé est saponifié pour former le sel de métal alcalin correspondant.

20. Composition de détergent, caractérisé en ce qu'elle contient au moins 5% en poids d'un produit tensioactif choisi dans le groupe se composant de produits tensioactifs anioniques, non ioniques, à ions hermaphrodites, ampholytiques et amphotères; et au moins 1% en poids d'un copolymère ayant la formule empirique suivante:

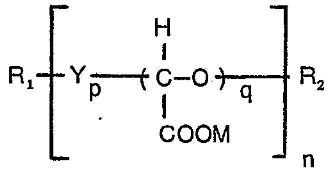

où Y est un ou plusieurs comonomères distribués au hasard dans le polymère; n est en moyenne au moins 4; p vaut 0 à environ 2; q est au moins 1; $R_1$ et $R_2$ sont individuellement n'importe quel groupe chimiquement stable qui stabilise le polymère de manière telle que, dans une solution aqueuse de soude 0,5 molaire contenant 10 grammes par litre de polymère, le longueur de chaîne moyenne du polymère ne soit pas réduite de plus de 50%, tel que déterminé par résonance magnétique des protons, après 1 heure à 20°C; et M est choisi parmi un métal alcalin, l'ammonium et des groupes alcanolamines ayant 1 à 4 atomes de carbone dans la chaîne alkyle.

21. Composition de détergent selon la revendication 20, caractérisée en ce que le polymère forme environ 5 à 75% en poids de la composition de détergent.

22. Composition de détergent selon la revendication 20, caractérisée en ce que p vaut 0 et q vaut 1.

23. Composition de détergent selon la revendication 20, caractérisée en ce que n est en moyenne compris entre environ 50 et environ 200.

24. Composition de détergent selon la revendication 23, caractérisée en ce que p vaut 1 et q vaut au moins 1.

25. Composition de détergent selon la revendication 23, caractérisée en ce que p vaut 1 et q vaut au moins environ 5.

26. Composition de détergent selon la revendication 20, caractérisée en ce que Y est choisi dans le groupe se composant de

—$CH_2CH(CH_3)O$—, —$CH_2CH_2O$—, 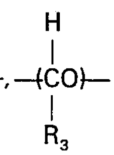

et de leurs mélanges, où $R_3$ est l'hydrogène ou un groupe alkyle contenant 1 à 20 atomes de carbone.

27. Composition selon la revendication 20, caractérisée en ce que $R_1$ et $R_2$ sont individuellement choisis dans le groupe se composant de groupes alkyles et de groupes alkyles cycliques contenant de l'oxygène.

28. Composition de détergent selon la revendication 27, caractérisé en ce que M' est un métal alcalin.

## Patentansprüche

1. Polymer der Formel:

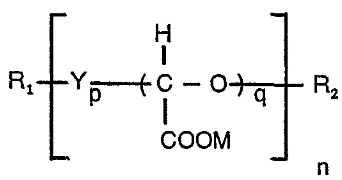

worin Y eines oder mehrere Comonomere, die statistisch in dem Polymer verteilt sind; n einen durchschnittlichen Wert von mindestens 4; p 0 bis etwa 2; q mindestens 1; $R_1$ und $R_2$ unabhängig voneinander irgendwelche chemisch stabilen Gruppen, die das Polymer stabilisieren, so daß die durchschnittliche Kettenlänge des Polymers in einer wäßrigen 0,5 molaren Natriumhydroxidlösung, die 10 g des Polymers pro 1 enthält, nach 1 Stunde bei 20°C um nicht mehr als 50%, gemessen durch protonenmagnetische Resonanz verringert wird; bedeuten und M aus der Alkalimetalle, Ammonium, Alkylgruppen mit 1 bis 4 Kohlenstoffatomen und Alkanolamingruppen mit 1 bis 4 Kohlenstoffatomen in der Alkylkette umfassenden Gruppe ausgewählt ist.

2. Polymer nach Anspruch 1, dadurch gekennzeichnet, daß n einen durchschnittlichen Wert zwischen etwa 10 und etwa 200 aufweist.

3. Polymer nach Anspruch 1, dadurch gekennzeichnet, daß n einen durchschnittlichen Wert zwischen etwa 50 und etwa 100 aufweist.

4. Polymer nach Anspruch 1, dadurch gekennzeichnet, daß p 0 und q 1 bedeuten.

5. Polymer nach Anspruch 1, dadurch gekennzeichnet, daß p und q jeweils etwa 1 bedeuten.

6. Polymer nach Anspruch 1, dadurch gekennzeichnet, daß p 1 und q mindestens etwa 5 bedeuten.

7. Polymer nach Anspruch 1, dadurch gekennzeichnet, daß $R_1$ und $R_2$ unabhängig voneinander aus der Gruppe ausgewählt sind, die Alkylgruppen, sauerstoffhaltige Alkylgruppen und sauerstoffhaltige cyclische Alkylgruppen umfaßt.

8. Polymer nach Anspruch 5, dadurch gekennzeichnet, daß Y aus der Gruppe ausgewählt ist, die Gruppen der Formeln

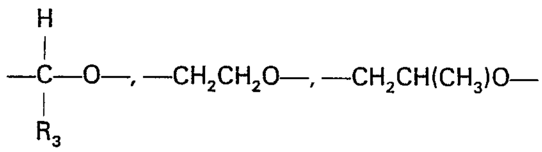

und Mischungen davon umfaßt, worin $R_3$ für ein Wasserstoffatom oder eine Alkylgruppe mit 1 bis 20 Kohlenstoffatomen steht, und M Natrium oder Kalium bedeutet.

9. Polymer nach Anspruch 4, dadurch gekennzeichnet, daß $R_1$ eine Gruppe der Formel $HO(CH_2CH_2O)_{1-3}$ und $R_2$ eine Gruppe der Formel $-(CH_2CH_2O)_{1-3}H$ bedeuten und n einen durchschnittlichen Wert zwischen etwa 50 und etwa 200 aufweist.

10. Polymer nach Anspruch 4, dadurch gekennzeichnet, daß M für ein Alkalimetall steht.

11. Polymer nach Anspruch 4, dadurch gekennzeichnet, daß M Natrium, $R_1$ eine Gruppe der Formeln

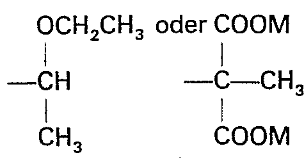

und $R_2$ eine Gruppe der Formel

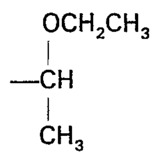

bedeuten und n einen durchschnittlichen Wert von etwa 50 besitzt.

12. Verfahren zur Herstellung des Polymers nach Anspruch 1, dadurch gekennzeichnet, daß man

(A) einen Ester von Glyoxylsäure unter Polymerisationsbedingungen mit einem Polymerisationsinitiator zusammenbringt; und

(B) an die Endgruppen des gebildeten Polymers chemisch stabile Endgruppen addiert, die dem Polymer die erforderliche Stabilität in einer wäßrigen Natriumhydroxidlösung verleihen.

13. Verfahren nach Anspruch 12, dadurch gekennzeichnet, daß die Stufe (A) darin besteht, einen Ester von Glyoxylsäure unter Polymerisationsbedingungen mit mindestens einem Comonomeren und einem Polymerisationsinitiator zusammenzubringen.

14. Verfahren nach Anspruch 13, dadurch gekennzeichnet, daß das Comonomer aus der Gruppe ausgewählt ist, die Epoxyverbindungen, Aldehyde, Verbindungen mit Carboxylatgruppen als Substituenten und Mischungen davon umfaßt.

15. Verfahren nach Anspruch 14, dadurch gekennzeichnet, daß man als Comonomer einen Aldehyd verwendet.

16. Verfahren nach Anspruch 14, dadurch gekennzeichnet, daß man als Comonomer eine Epoxyverbindung verwendet.

17. Verfahren nach Anspruch 12, dadurch gekennzeichnet, daß der Polymerisationsinitiator aus der Gruppe ausgewählt ist, die Amine, starke Lewis-Säuren, Hydroxidionen und Cyanidionen umfaßt.

18. Verfahren nach Anspruch 12, dadurch gekennzeichnet, daß die chemisch stabile Endgruppe aus der Alkylgruppen, sauerstoffhaltige Alkylgruppen und sauerstoffhaltige cyclische Alkylgruppen umfassenden Gruppe ausgewählt ist.

19. Verfahren nach Anspruch 18, dadurch gekennzeichnet, daß man den stabilisierten Polymerester zu dem entsprechenden Alkalimetallsalz verseift.

20. Waschmittel, dadurch gekennzeichnet, daß es mindestens 5 Gew.-% eines oberflächenaktiven Mittels aus der anionische, nichtionische, zwitterionische, ampholytische und amphotere oberflächenaktive Mittel umfassenden Gruppe und mindestens 1 Gew.-% eines Copolymers der folgenden Formel:

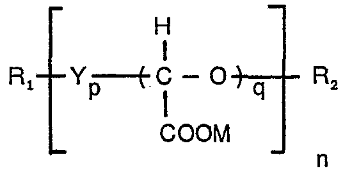

worin Y eines oder mehrere Comonomere, die statistisch in dem Polymer verteilt sind; n einen durchschnittlichen Wert von mindestens 4; p 0 bis etwa 2; q mindestens 1; $R_1$ und $R_2$ unabhängig voneinander irgendwelche chemisch stabilen Gruppen, die das Polymer stabilisieren, so daß die durchschnittliche Kettenlänge des Polymers in einer wäßrigen 0,5 molaren Natriumhydroxidlösung, die 10 g des Polymers pro 1 enthält, nach 1 Stunde bei 20°C um nicht mehr als 50%, gemessen durch protonenmagnetische Resonanz verringert wird; bedeuten und M aus der Alkalimetalle, Ammonium und Alkanolamingruppen mit 1 bis 4 Kohlenstoffatomen in der Alkylkette umfassenden Gruppe ausgewählt ist, enthält.

21. Waschmittel nach Anspruch 20, dadurch gekennzeichnet, daß das Polymer 5 bis 75 Gew.-% des Waschmittels ausmacht.

22. Waschmittel nach Anspruch 20, dadurch gekennzeichnet, daß p 0 und q 1 bedeuten.

23. Waschmittel nach Anspruch 20, dadurch gekennzeichnet, daß n einen durchschnittlichen Wert zwischen etwa 50 und etwa 200 aufweist.

24. Waschmittel nach Anspruch 23, dadurch gekennzeichnet, daß p 1 und q mindestens 1 bedeuten.

25. Waschmittel nach Anspruch 23, dadurch gekennzeichnet, daß p 1 und q mindestens etwa 5 bedeuten.

26. Waschmittel nach Anspruch 20, dadurch gekennzeichnet, daß Y aus der Gruppe ausgewählt ist, die Gruppen der Formeln

$—CH_2CH(CH_3)O—$, $—CH_2CH_2O—$, 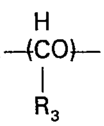

und Mischungen davon umfaßt, worin $R_3$ für ein Wasserstoffatom oder eine Alkylgruppe mit 1 bis 20 Kohlenstoffatomen steht.

27. Mittel nach Anspruch 20, dadurch gekennzeichnet, daß $R_1$ und $R_2$ unabhängig voneinander aus der Gruppe ausgewählt sind, die sauerstoffhaltige Alkylgruppen und cyclische Alkylgruppen umfaßt.

28. Waschmittel nach Anspruch 27, dadurch gekennzeichnet, daß M' für ein Alkalimetall steht.